# EUROPÄISCHE PATENTSCHRIFT

(11) **EP 2 842 729 B1**
(45) Veröffentlichungstag und Bekanntmachung des Hinweises auf die Patenterteilung: **05.09.2018**
(21) Anmeldenummer: 14002455.5
(22) Anmeldetag: 16.07.2014
(51) Int. Cl.: B29C 70/44, B29C 70/54, B29C 70/08, B29C 70/48

(54) **Verfahren zur Herstellung von Faserverbundbauteilen mit integrierter Isolation**
Method for producing fibre compound components with integrated insulation
Procédé de fabrication d'éléments composites en fibres dotés d'une isolation intégrée

(30) Priorität: 31.07.2013 DE 102013012762
(43) Veröffentlichungstag der Anmeldung: 04.03.2015
(73) Patentinhaber: MT Aerospace AG, 86153 Augsburg (DE)
(72) Erfinder: Lippert, Thomas, 80997 München (DE)
(74) Vertreter: Grape & Schwarzensteiner

(56) Entgegenhaltungen:
- EP-B1- 1 996 389
- WO-A1-03/064144
- DE-A1-102012 204 604
- DE-C1- 10 203 975
- DE-T2- 69 118 374
- US-A1- 2006 125 155

## Beschreibung

Die vorliegende Erfindung betrifft ein Verfahren zur Herstellung von Faserverbundbauteilen oder auch Faserverbundbehältern mit einer damit integrierten Isolation.

Derzeit werden Gehäuse, Behälter, insbesondere Druckbehälter, wie sie in der Luft- und Raumfahrt zur Aufnahme, Speicherung und Abgabe fester, flüssiger oder gasförmiger Treibstoffe verwendet werden, auf Basis von Faserverbundwerkstoffen hergestellt. Die Bauteile aus Faserverbundwerkstoffen werden durch Nasswickeln, Prepreg-Legen und/oder Prepreg-Wickeln sowie durch sogenanntes Trockenwickeln oder -ablegen mit anschließender Harzinfusion bzw. -injektion sowie anschließendem Aushärten hergestellt. Für die obigen Anwendungsfälle ist es erforderlich, dass derart hergestellte Gehäuse oder Behälter innen eine Isolationsschicht aufweisen, welche die Faserverbundgehäuse, -behälter, -druckbehälter abdichtet.

Nur die ersten beiden genannten Verfahren erlauben eine problemlose Fertigung, bei welcher eine solche Isolation für das Faserverbundgehäuse mit in das Hauptfertigungsverfahren integriert ist.

Im Allgemeinen wird zunächst ein Isolationsmaterial auf ein Werkzeug aufgebracht und anschließend kann der Faserverbundaufbau durch das Prepregverfahren bzw. das Nasswickelverfahren auf dem schon abgelegten Isolationsmaterial aufgebaut werden. Beide genannten Verfahren erlauben eine in-situ Härtung, d.h. der Aushärteprozess des Isolationsmaterials und des Faserverbundwerkstoffes erfolgt zusammen und gleichzeitig, womit der Verbund aus Faserverbundwerkstoff und Isolation fest verbunden und nicht mehr lösbar ist.

Für besondere Anwendungsfälle werden diese Gehäuse, Behälter oder Druckbehälter im Trockenwickel- bzw. Trockenlegeverfahren mit anschließender Harzinfusion bzw. Harzinjektion hergestellt.

Im Wesentlichen wird dabei so vorgegangen, dass auf einem Faserhalbzeug bzw. einer Faserpreform mehrere Angusslinien für das Harz mit ihnen zugeordneten Fließhilfefeldern angeordnet werden und so das Harz in das Faserhalbzeug bzw. die Faserpreform injiziert wird. Das Harz dringt in das Faserhalbzeug bzw. die Faserpreform ein, wobei jedoch Harzfronten entstehen, die im Verlauf der Infusion aufeinander zueilen und Luft und/oder Reaktionsgase zwischen sich einschließen. Dieser in etwa V-förmige Bereich bildet sich durch das Faserhalbzeug bzw. die Preform in Längsrichtung aus und ist nicht mit Harz durchtränkt. Im Lauf der Infusion wird dieser Bereich zwar immer kleiner, da das Harz von oben nach unten fließt. Gegen Ende der Infusion ist aber dieser Bereich immer noch nicht vollständig mit Harz getränkt. Je dicker das Faserhalbzeug bzw. die Preform ist, umso mehr Luft und/oder Reaktionsgase werden in diesem Bereich eingeschlossen. Es entstehen Fehlstellen (Poren) im Faserverbund. Soll gleichzeitig mit dem Aufbau des Faserverbundes ein Isolationsmaterial integriert werden, führen solche Fehlstellen auch zu einer verminderten Haftung zwischen Faserverbund und Isolation.

Die Bildung der Fehlstellen im Faserverbund wird durch die Integration mit der Isolation noch verstärkt.

Es ist daher Aufgabe der vorliegenden Erfindung, ein Verfahren zur Herstellung von Faserverbundgehäusen mit integriert ausgebildeter Isolation mittels Harzinfusion bzw. -injektion anzugeben, mit welchem die Bildung von Fehlstellen im Faserverbund durch den oben beschriebenen Einschluss von Luft und/oder Reaktionsgas vermieden und gleichzeitig auch die Haftung zwischen Faserverbund und Isolation verbessert oder zumindest gewährleistet wird.

Gegenstand der vorliegenden Erfindung ist ein Verfahren zur Herstellung von Faserverbundbauteilen mit integriert ausgebildeter Isolation mittels Harzinfusion bzw. -injektion gemäß Anspruch 1, wobei der Faserverbund und die Isolation unlösbar verbunden werden. Dieses Verfahren zeichnet sich im Wesentlichen durch das Ablegen oder Abwickeln eines trockenen Faserhalbzeugs auf einer Isolation aus, auf bzw. in welcher vorher auf der dem Faserhalbzeug zugewandten Seite gleichmäßig verteilt Kavitäten vorgesehen werden, über welche während der Infusion bzw. Injektion und Aushärtung des Harzes dadurch verdrängte Luft und/oder Reaktionsgase abgeleitet werden.

Das Vorsehen von Kavitäten zwischen der Isolation und dem Faserhalbzeug liefert wesentliche Vorteile für das erfindungsgemäße Verfahren. Die eingeschlossene Luft bzw. die möglichen Reaktionsgase, die sich während der Harzinfusion bzw. -injektion zwischen den wie oben beschriebenen, aufeinander zulaufenden Harzfronten sammeln, können über diese Kavitäten entweichen, bedingt durch den geringeren Fließwiderstand in diesem Bereich. Die Luft bzw. die Gase werden ausgespült oder mit Hilfe eines Vakuums seitlich abgesaugt. Nach dem Aushärten von Isolationsmaterial und mit Harz infundiertem Faserhalbzeug weist der Faserverbund weniger Fehlstellen (Poren) auf und der Verbund zwischen Isolationsmaterial und Faserverbundschicht wird verstärkt, da Harz nach vollständiger Sättigung des Faserhalbzeugs in die Kavitäten eindringt und somit eine zusätzliche Verankerung zwischen Faserverbundschicht und Isolationsschicht geschaffen wird. Die Aushärtung von Isolations- und Matrixmaterial kann auch gleichzeitig erfolgen.

Weitere Vorteile des erfindungsgemäßen Verfahrens ergeben sich aus den Merkmalen der Unteransprüche 2 bis 16. So lassen sich die Kavitäten in einem für vorliegende Anwendungsfälle üblichen Isolationsmaterial, wie Lagen aus geeigneten Elastomeren, wie EPDM, Silikon oder dergleichen, durch Einprägen der Kavitäten mit einem Metall- oder Kunststoffformzeug erzeugen. Je nach Geometrie und Ausprägung des Formzeugs lassen sich Ausnehmungen in dem Isolationsmaterial, vorzugsweise in einer Gitternetzform ausbilden, indem das Isolationsmaterial zusammen mit dem Formzeug ausgehärtet oder zumindest vorgehärtet und dieses danach entfernt wird. Die Kavitäten lassen sich gleichermaßen durch Einfräsen einer Gitterstruktur auf der Isolationsschicht ausbilden.

Das Formzeug kann auch eine Gewirkmatte sein, die mittels Vakuum auf die Oberfläche des Isolationsmaterials gepresst und nach dem Aushärten abgelöst wird. Die Oberfläche des Isolationsmaterials ist dann unregelmäßig strukturiert.

Die Kavitäten müssen nicht notwendigerweise in dem Isolationsmaterial selbst sondern auf dieser vorgesehen sein, vorzugsweise durch Ablegen einer Art Fließhilfe zwischen dem Isolationsmaterial und dem Faserhalbzeug. Auch mithilfe einer Fließhilfe wird ein Hohlraum, respektive eine Kavität zwischen dem Isolationsmaterial und dem Faserhalbzeug geschaffen, der aufgrund des geringeren Fließwiderstandes den Abtransport von Luft und/oder Reaktionsgas während der Harzinfusion bzw. -injektion gestattet. Isolationsmaterial und Faserverbund werden mittels der ebenfalls infundierten Fließhilfe unlösbar miteinander verklebt. Gleichzeitig wird die Porenbildung aufgrund der oben beschriebenen Harzfronten reduziert.

Vorzugsweise wird die Isolationsschicht vor dem Ablegen oder Abwickeln des Faserhalbzeugs darauf vorgehärtet. Dieses Vorhärten der Isolation, das bei einer Ausführungsform der Erfindung auch zur Permanentausbildung der Kavitäten dient, sichert im später erzeugten Faserverbundbauteil, -gehäuse, -behälter, -druckbehälter eine gasdichte Oberfläche. Das Vorhärten wird vorzugsweise in einem Autoklaven durchgeführt.

Vorzugsweise wird die Isolationsschicht vor dem Ablegen oder Abwickeln des Faserhalbzeugs darauf mit einem handelsüblichen Primer behandelt, um die Oberfläche des Isolationsmaterials auf ihrer dem Faserhalbzeug zugewandten Seite derart zu modifizieren, dass die Haftung zwischen dem Isolations- bzw. Linermaterial und dem Faserhalbzeug nach dem Aushärten verbessert wird. Geeignete Primer sind alle in der einschlägigen Technik bekannten Mittel.

Die Faserhalbzeuge bzw. Faserpreformen können aus einem einheitlichen Fasermaterial oder Mischungen unterschiedlicher Fasermaterialien gebildet sein oder werden. Vorzugsweise kommen Faserhalbzeuge oder Faserpreformen auf Basis von Glasfasern, Keramikfasern, Aramidfasern und/oder Kohlenstofffasern zum Einsatz, welche eine erhöhte oder hohe thermische und mechanische Festigkeit des damit erzeugten Faserverbundes garantieren. Kohlenstofffasern sind die bevorzugteste Wahl.

Dementsprechend werden die zur Infusion bzw. Injektion verwendeten Harze aus der Gruppe der Duroplaste, insbesondere aus Epoxidharzen (EP), Harnstoff-Formaldehydharzen (UF), Melamin-Formaldehydharzen (MF), Melamin-Phenol-Formaldehydharzen (MP), Phenolharzen (PH), Phenol-Formaldehydharzen (PF) oder ungesättigten Polyesterharzen (UP) sowie Bismaleimidharzen (BMI), ausgewählt. Bestimmend für das Harz der Wahl ist wieder die zu erreichende hohe mechanische und thermische Festigkeit des herzustellenden Faserverbundes.

Insbesondere in letzterem Zusammenhang ist auch die Auswahl des Materials für die Isolations- bzw. Linerschicht, welche mit dem Faserverbund integral ausgebildet werden soll, wesentlich. Bevorzugte kompatible Materialien sind daher geeignete Elastomerlagen aus EPDM (Ethylen-Propylen-Dien-Monomer) und Silikon.

Insbesondere bevorzugt wird man ein Isolationsmaterial aus EPDM auswählen, da damit sehr hohe Aushärtetemperaturen für das Harz möglich sind, welche zum Erreichen einer hohen thermischen und mechanischen Festigkeit des Faserverbundes erforderlich sein können. Es können auch sogenannte gefüllte EPDMs eingesetzt werden, welche mit Füllstoff oder wie oben beschriebenen Fasern verstärkt sind.

Hinsichtlich der erfindungsgemäß in der Isolationsschicht vorzusehenden Kavitäten ist noch festzuhalten, dass diese bevorzugt eingedruckt oder eingefräst werden. Diese Kavitäten, vorzugsweise in Form eines Gitternetzes, können je nach gewünschtem oder erforderlichem Harzfluss mit verschiedenen Querschnitten ausgebildet werden, also verschieden dick bzw. tief sein. Ausreichend ist beispielsweise ein Tiefe oder Breite von 5/10 Millimeter. Sie können von Fall zu Fall und in Abhängigkeit von der Geometrie des herzustellenden Bauteils (Behälter etc.) sowie von der Anzahl der vorgesehenen Fließhilfefelder und der Preform über den gesamten Bereich der Linerschicht verteilt oder nur in Teilbereichen vorgesehen sein.

Sowohl die Isolation als auch das Faserhalbzeug kann in mehren Lagen aufgebaut werden.

Das erfindungsgemäße Verfahren eignet sich insbesondere zur Herstellung von CFK-Bauteilen oder -Gehäusen mit integrierter Isolationsschicht. Es findet Anwendung insbesondere zur Herstellung von Gehäusen, Behältern, insbesondere Druckbehältern, wie sie in der Luft- und Raumfahrt verwendet werden.

Im Folgenden wird die Erfindung mithilfe einer Zeichnung, welche die Vorteile des erfindungsgemäßen Verfahrens verdeutlichen soll, erläutert. In den Abbildungen (a), (b) und (c) sind im Zeitverlauf zwei während der Harzinfusion bzw. - infiltration aufeinander zueilende Harzfronten schematisch dargestellt. Abbildung (a) zeigt die aufeinanderzu eilenden Harzfronten zu einem Zeitpunkt t1, Abbildung (b) zu einem Zeitpunkt t1 + x Minuten und Abbildung (c) zu einem Zeitpunkt t1 + 2 x Minuten.

Die Abbildungen zeigen gleichermaßen schematisch und im Querschnitt einen möglichen Infusionsaufbau.

Auf einem Werkzeug 7 ist das Isolationsmaterial 4 abgelegt. Darüber ist das Faserhalbzeug bzw. die Faserpreform 3 durch Ablegen oder Abwickeln angeordnet. Darauf folgt eine luft- und harzdurchlässige gelochte Trennfolie 8. Mit der Bezugsziffer 10 sind Angussleitungen für das zu infundierende Harz bezeichnet, unter welchen jeweils Fließhilfefelder 9 zur Verteilung des Harzes über dem Faserhalbzeug bzw. der Faserpreform 3 positioniert sind. Das Ganze ist im gezeigten Fall von einer Vakuumfolie 12 und zumindest einem sogenannten Entlüftungsvlies 11 umschlossen. In das Isolationsmaterial 4 sind Kavitäten 5 in Form eines Gitternetzes 6 eingearbeitet.

Die vorstehende Beschreibung gilt für jede der Abbildungen (a), (b) und (c).

Das Fertigungsverfahren weist somit die folgenden Schritte auf:
- Ablegen einer Schicht aus Isolationsmaterial auf einem Werkzeug;
- Gegebenenfalls Vorhärtung des Isolationsmaterials, um eine gasdichte Oberfläche zu erzeugen;
- Bearbeiten des Isolationsmaterials auf Sollkontur und durch
   a. Einfräsen einer Gitterstruktur;
   b. Verformen der Oberfläche des Isolationsmaterials durch Drücken, Pressen und dergleichen, beispielsweise mithilfe eines Metall- oder Kunststoffsformzeugs oder eines Gewirks;
- oder Einlegen bzw. Auflegen einer Fließhilfe;
- Gegebenenfalls Vorbehandlung des Isolationsmaterials mit einem Primer;
- Ablegen oder Abwickeln eines Faserhalbzeugs oder einer entsprechenden Preform;
- Ablegen des Infusionsaufbaus wie oben beschrieben;
- Infusion bzw. Injektion des Harzes als Matrixmaterial für den Faserverbund;
- Härten und
- Entformen des Bauteils.

In den Abbildungen (a), (b) und (c) ist das Fortschreiten des Harzes durch das Faserhalbzeug bzw. die Faserpreform 3 während der Infiltration dargestellt. Die Pfeile 13 kennzeichnen jeweils das mit Harz durchtränkte Faserhalbzeug 3 bzw. die mit Harz durchtränkte Preform. Die Pfeile 14 kennzeichnen die Harzfronten, das heißt die Grenzen zwischen mit Harz durchtränktem Material und nicht mit Harz durchtränktem Material. Die davon begrenzten, etwa V-förmigen Bereiche 15 schließen die während der Harzinfiltration verdrängte Luft und gegebenenfalls Reaktionsgase ein. Mit zunehmender Infiltrationszeit t1, t1 + x min und t1 + 2x min wird der Bereich 15 eingeschlossener Luft zunehmend kleiner, das heißt, die Harzfronten 14 eilen aufeinander zu. Da das Faserhalbzeug 3 auf der Isolation 4 und dem Werkzeug 7 abgelegt ist, ist eine vollständige Entgasung nicht möglich, so dass kleine Lufteinschlüsse an der Grenze zwischen Isolationsmaterial 4 und harzdurchtränktem Faserhalbzeug 3 verbleiben würden.

Durch das Vorsehen eines wie oben beschriebenen Gitternetzes 6 in dem Isolations- bzw. Linermaterial 4 sind Kavitäten 5 geschaffen, über welche diese Restluft abtransportiert werden kann, da damit ein Bereich geringeren Fließwiderstands geschaffen ist. Der Abtransport der Luft erfolgt seitlich horizontal auf Ebene der Kavitäten, wie durch die Pfeile 16, 16' angegeben ist. Der Abtransport erfolgt beispielsweise durch außerhalb des Infusionsaufbaus vorhandene Saugleitungen (nicht gezeigt).

Der Faserverbund wird porenfrei. Da das Harz auch in die Kavitäten eindringt, welche gleichzeitig die Verbindungsoberfläche des Isolationsmaterials 4 mit dem Faserhalbzeug 3 vergrößern, wird eine effektive und unlösbare Verbindung zwischen der Isolation und dem Faserverbund nach dem Aushärten des Harzes sichergestellt.

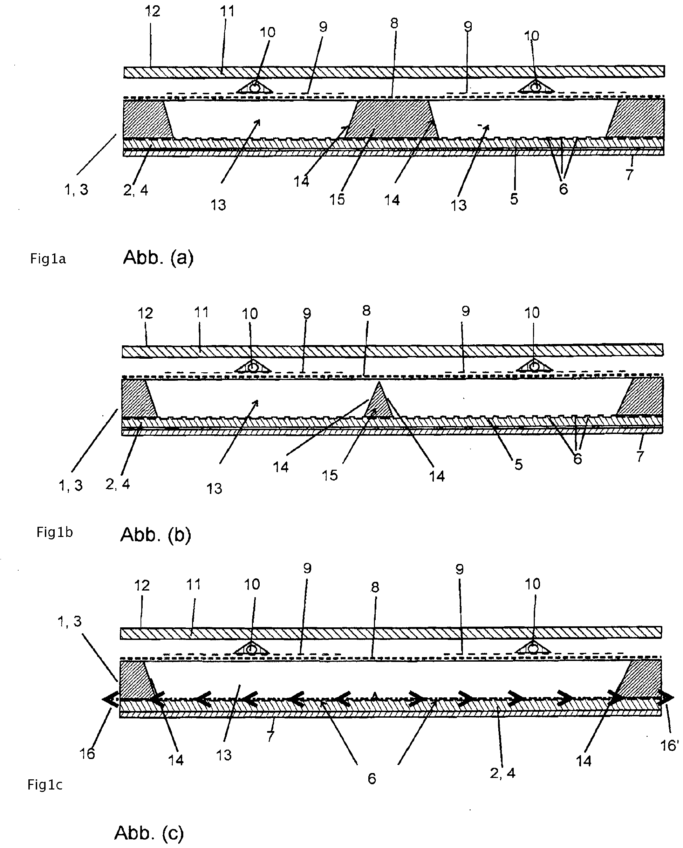

## Patentansprüche

1. Verfahren zur Herstellung von Faserverbundgehäusen mittels Harzinfusion bzw. -injektion, bei dem eine Faserverbundschicht (1) und eine Isolation (2) integral und gleichzeitig miteinander ausgeformt werden, indem Harz mit Hilfe von Angussleitungen (10) über ein Faserhalbzeug verteilt und in dieses eindringen gelassen wird, wobei die folgenden Schritte ausgeführt werden:
- Ablegen eines Isolationsmaterials (4) auf einem Werkzeug (7),
- Ausbilden von gleichmäßig verteilten Kavitäten (5) in dem Isolationsmaterial (4),
- Ablegen oder Abwickeln eines trockenen Faserhalbzeugs (3) auf dem so ausgebildeten Isolationsmaterial (4),
- Infundieren bzw. Infiltrieren des Faserhalbzeugs (3) mit Harz vom oben nach unten durch das Faserhalbzeug (3), wobei durch das Harz verdrängte Luft und/oder Reaktionsgase über die Kavitäten (5) seitlich horizontal auf Ebene der Kavitäten (5) ausgeleitet werden,
- Härten und Entformen des Gehäuses.

2. Verfahren nach Anspruch 1, **dadurch gekennzeichnet, dass** die Kavitäten (5) in Form eines Gitternetzes (6) in das Isolationsmaterial (4) eingebracht werden.

3. Verfahren nach Anspruch 2, **dadurch gekennzeichnet, dass** das Gitternetz mittels eines entsprechend ausgebildeten Metall- oder Kunststoffstempels in das Isolationsmaterial (4) geprägt werden.

4. Verfahren nach Anspruch 2, **dadurch gekennzeichnet, dass** das Gitternetz (6) durch Fräsen einer Gitterstruktur in das Isolationsmaterial (4) ausgebildet wird.

5. Verfahren nach Anspruch 1, **dadurch gekennzeichnet, dass** die Kavitäten (5) durch Einlegen einer Fließhilfe zwischen das Isolationsmaterial (4) und das Faserhalbzeug (3) geschaffen werden.

6. Verfahren nach einem der Ansprüche 1 bis 4, **dadurch gekennzeichnet, dass** die ausgebildeten Kavitäten (5) je nach gewünschtem bzw. erforderlichem Harzfluss mit unterschiedlichen Querschnitten, d.h. Dicken bzw. Tiefen, ausgebildet werden.

7. Verfahren nach einem der Ansprüche 1 bis 6, **dadurch gekennzeichnet, dass** die Kavitäten (5) über dem gesamten Bereich der Isolationsschicht oder nur in Teilbereichen davon ausgebildet werden.

8. Verfahren nach einem der Ansprüche 1 bis 7, **dadurch gekennzeichnet, dass** das Isolationsmaterial (4) vor dem Ablegen oder Abwickeln des Faserhalbzeugs (3) vorgehärtet wird.

9. Verfahren nach Anspruch 7, **dadurch gekennzeichnet, dass** das Vorhärten des Isolationsmaterials (4) in einem Autoklaven durchgeführt wird.

10. Verfahren nach einem der Ansprüche 1 bis 9, **dadurch gekennzeichnet, dass** das Isolationsmaterial (4) vor dem Ablegen oder Abwickeln des Faserhalbzeugs (3) mit einem Primer behandelt wird.

11. Verfahren nach einem der Ansprüche 1 bis 10, **dadurch gekennzeichnet, dass** als Faserhalbzeug (3) ein einheitliches Material oder Mischungen unterschiedlicher Materialien verwendet werden.

12. Verfahren nach Anspruch 11, **dadurch gekennzeichnet, dass** das oder die Materialien aus Glasfasern, Keramikfasern, Borfasern, Aramidfasern und/oder Kohlenstofffasern ausgewählt wird/werden.

13. Verfahren nach den Ansprüchen 11 und 12, **dadurch gekennzeichnet, dass** das Faserhalbzeug (3) mit einem Binder als Preform eingesetzt wird.

14. Verfahren nach einem der Ansprüche 1 bis 13, **dadurch gekennzeichnet, dass** das Harz (Matrixmaterial) aus der Gruppe der Duroplaste, insbesondere aus Epoxidharzen (EP), Harnstoff-Formaldehydharzen (UF), Melamin-Formaldehydharzen (MF), Melamin-Phenol-Formaldehydharzen (MP), Phenol-Formaldehyd-harzen (PF) oder ungesättigten Polyesterharzen (UP) sowie Bismaleimidharzen (BMI), ausgewählt wird.

15. Verfahren nach einem der Ansprüche 1 bis 14, **dadurch gekennzeichnet, dass** als Isolationsmaterial (4) geeignete Gummifolien, insbesondere aus EPDM oder Silikon eingesetzt werden.

16. Verfahren nach einem der Ansprüche 1 bis 15, zur Herstellung von CFK-Gehäusen zur Aufnahme von festen, flüssigen oder gasförmigen Treibstoffen.

## Claims

1. Method for producing fibre composite housings by resin infusion or resin injection, respectively, in which a fibre composite layer (1) and an insulation (2) are formed integrally and at the same time as each other by distributing resin across a fibre semi-finished product by means of gate lines (10) and permitting it to penetrate it, comprising the following steps:
- depositing an insulation material (4) on a tool (7);
- forming evenly spread cavities (5) in the insulation material (4);
- depositing or winding-up a dry fibre semi-finished product (3) on the insulation material (4) formed in this manner;
- infusion or infiltration, respectively, of the fibre semi-finished product (3) with resin from top down through the fibre semi-finished product (3), wherein air displaced by the resin and/or reaction gases are discharged through the cavities (5) laterally horizontally on the level of the cavities (5);
- hardening and demoulding of the housing.

2. Method according to claim 1, **characterised in that** the cavities (5) are introduced into the insulation material (4) in the form of a grid (6).

3. Method according to claim 2, **characterised in that** the grid is embossed in the insulation material (4) by an accordingly formed metal stamp or plastic stamp.

4. Method according to claim 2, **characterised in that** the grid (6) is formed by cutting a grid structure into the insulation material (4).

5. Method according to claim 1, **characterised in that** the cavities (5) are created by insertion of a flow acid between the insulation material (4) and the fibre semi-finished product (3).

6. Method according to one of claims 1 to 4, **characterised in that** the formed cavities (5) are formed with different cross-sections, i.e. thicknesses or depths, respectively, depending on the desired and/or required resin flow.

7. Method according to one of claims 1 to 6, **characterised in that** the cavities (5) are formed across the entire area of the insulation layer or only in partial areas of it.

8. Method according to one of claims 1 to 7, **characterised in that** the insulation material (4) is pre-hardened before depositing or winding-up of the fibre semi-finished product (3) .

9. Method according to claim 7, **characterised in that** the prehardening of the insulation material (4) is performed in an autoclave.

10. Method according to one of claims 1 to 9, **characterised in that** the insulation material (4) is treated with a primer before depositing or winding-up of the fibre semi-finished product (3).

11. Method according to one of claims 1 to 10, **characterised in that** a uniform material or mixtures of different materials are used as fibre semi-finished product (3).

12. Method according to claim 11, **characterised in that** the material or materials is/are chosen from glass fibres, ceramic fibres, boron fibres, aramide fibres and/or carbon fibres.

13. Method according to claims 11 and 12, **characterised in that** the fibre semi-finished product (3) is used with a binder as preform.

14. Method according to one of claims 1 to 13, **characterised in that** the resin, i.e. matrix material, is chosen from the group of thermosets, in particular of epoxy resins, urea formaldehyde resins, melamine formaldehyde resins, melamine phenol formaldehyde resins, phenol formaldehyde resins or unsaturated polyester resins as well as bismaleimide resins.

15. Method according to one of claims 1 to 14, **characterised in that** suitable rubber films, in particular of EPDM or silicone, are used as insulation material (4).

16. Method according to one of claims 1 to 15 for producing CFK housings for taking up solid, liquid or gaseous fuels.

## Revendications

1. Procédé de fabrication de boîtiers en composite de fibres par infusion ou injection de résine, dans lequel une couche de composite de fibres (1) et une isolation (2) sont moulées intégralement et simultanément l'une avec l'autre du fait que la résine est répartie sur un semi-produit de fibres à l'aide de conduites de coulée (10) et on la laisse pénétrer dans celle-ci,
dans lequel les étapes suivantes sont exécutées :
- poser un matériau d'isolation (4) sur un outil (7),
- réaliser des cavités (5) réparties de façon régulière dans le matériau d'isolation (4),
- poser ou dérouler un semi-produit de fibres sec (3) sur le matériau d'isolation (4) ainsi réalisé,
- infuser ou infiltrer une résine dans le semi-produit de fibres (3) depuis le haut vers le bas à travers le semi-produit de fibres (3), l'air et/ou des gaz de réaction refoulés par la résine étant évacués via les cavités (5) latéralement et horizontalement sur le plan des cavités (5),
- faire durcir et démouler le boîtier.

2. Procédé selon la revendication 1, **caractérisé en ce que** les cavités (5) sont ménagées sous la forme d'un réseau de grille (6) dans le matériau d'isolation (4).

3. Procédé selon la revendication 2, **caractérisé en ce que** le réseau de grille est matricé dans le matériau d'isolation (4) au moyen d'un poinçon réalisé en correspondance en métal ou en matière plastique.

4. Procédé selon la revendication 2, **caractérisé en ce que** le réseau de grille (6) est réalisé par fraisage d'une structure de grille dans le matériau d'isolation (4).

5. Procédé selon la revendication 1, **caractérisé en ce que** les cavités (5) sont créées en posant un accessoire d'aide à l'écoulement entre le matériau d'isolation (4) et le semi-produit de fibres (3).

6. Procédé selon l'une des revendications 1 à 4, **caractérisé en ce que** les cavités (5) sont réalisées en fonction du flux de résine souhaité ou requis avec différentes sections transversales, c'est-à-dire avec différentes épaisseurs ou profondeurs.

7. Procédé selon l'une des revendications 1 à 6, **caractérisé en ce que** les cavités (5) sont réalisées sur toute la zone de la couche d'isolation ou seulement sur des zones partielles de celle-ci.

8. Procédé selon l'une des revendications 1 à 7, **caractérisé en ce que** le matériau d'isolation (4) est pré-durci avant de poser ou de dérouler le semi-produit de fibres (3).

9. Procédé selon la revendication 7, **caractérisé en ce que** le pré-durcissement du matériau d'isolation (4) est effectué dans un autoclave.

10. Procédé selon l'une des revendications 1 à 9, **caractérisé en ce que** le matériau d'isolation (4) est traité avec un apprêt avant de poser ou de dérouler le semi-produit de fibres (3).

11. Procédé selon l'une des revendications 1 à 10, **caractérisé en ce qu'**un matériau unitaire ou des mélanges de différents matériaux sont utilisés à titre de semi-produit de fibres (3) .

12. Procédé selon la revendication 11, **caractérisé en ce que** le ou les matériaux sont choisis parmi des fibres de verre, des fibres de céramique, des fibres de bore, des fibres d'aramide et/ou de fibres de carbone.

13. Procédé selon les revendications 11 et 12, **caractérisé en ce que** le semi-produit de fibres (3) est utilisé avec un liant à titre de préforme.

14. Procédé selon l'une des revendications 1 à 13, **caractérisé en ce que** la résine, c'est-à-dire un matériau de matrice, est choisie parmi le groupe comprenant les résines thermodurcissables, en particulier parmi les résines époxy, les résines urée-formaldéhyde, les résines mélamineformaldéhyde, les résines mélamine-phénol-formaldéhyde, les résines phénol-formaldéhyde ou les résines de polyester insaturées ainsi que les résines de bis-maléimide.

15. Procédé selon l'une des revendications 1 à 14, **caractérisé en ce que** des feuilles en caoutchouc appropriées, en particulier en EPDM ou en silicone, sont utilisées à titre de matériau d'isolation (4).

16. Procédé selon l'une des revendications 1 à 15 pour fabriquer des boîtiers en matière synthétique renforcée de fibres de carbone pour recevoir des carburants solides, liquides ou gazeux.
